# EUROPÄISCHE PATENTSCHRIFT

(11) **EP 4 025 407 B1**
(45) Veröffentlichungstag und Bekanntmachung des Hinweises auf die Patenterteilung: **11.10.2023**
(21) Anmeldenummer: 20761799.4
(22) Anmeldetag: 25.08.2020
(51) Int. Cl.: B29C 48/25, B29C 48/395, B29C 48/40, B29C 48/94, F16J 15/40, F16J 15/18

(54) **ABDICHTVORRICHTUNG**
SEALING DEVICE
DISPOSITIF D'ÉTANCHÉITÉ

(30) Priorität: 04.09.2019 DE 102019123606
(43) Veröffentlichungstag der Anmeldung: 13.07.2022
(73) Patentinhaber: KraussMaffei Extrusion GmbH, 30880 Laatzen (DE)
(72) Erfinder: TIEBEN, Michael, 29614 Soltau (DE); SCHUSSKY, Sven, 30890 Barsinghausen (DE)
(74) Vertreter: Wilhelm, Ludwig
(86) Internationale Anmeldenummer: PCT/EP2020/073714
(87) Internationale Veröffentlichungsnummer: WO 2021/043629

(56) Entgegenhaltungen:
- EP-A1- 2 842 716
- DE-B3-102015 211 917
- JP-U- S5 513 072

## Beschreibung

Die vorliegende Erfindung betrifft eine Abdichtvorrichtung zum Abdichten von drehbar gelagerten Wellen. Zudem betrifft die vorliegende Erfindung ein Verfahren zur Herstellung derartiger Abdichtvorrichtungen.

In einer Vielzahl von Maschinen werden Wellen zur Übertragung von Drehbewegungen verwendet. Insbesondere ist es bekannt, Antriebswellen zum Drehen von Mischvorrichtungen zu verwenden. Hierzu werden die Antriebswellen von einem Getriebe und/oder Motor aus in ein Gehäuse geführt, in dem sie mit den Mischvorrichtungen verbunden sind, um diese zu bewegen. Ein Beispiel für derartige Maschinen sind Extrusionsanlagen, in denen in einem Gehäuse rotierende Extruderschnecken eine Extrusionsmasse durchwalken bzw. durchmischen. Derartige Extruderschnecken sind mit einer Antriebswelle verbunden, die aus dem Gehäuse der Extrusionsanlage herausragt.

JP S55 13072 U bezieht sich auf eine Dichtungsvorrichtung für einen Schraubenlagerabschnitt einer Extrusionsformmaschine,

Bei derartigen Mischvorrichtungen kann es aufgrund des Mischvorgangs (z.B. aufgrund von Abrieb) oder aufgrund der für die Mischung verwendeten Materialien (z.B. Materialien oder Mischzusätze in Pulverform, wie etwa Kreide, Talkum oder Farbpulver) zu einer starken Staubentwicklung kommen. Ohne Abdichtung des Zwischenraums zwischen dem Gehäuse der Mischvorrichtung und der aus dem Gehäuse ragenden Welle würde es während des Betriebs zu einer starken Verschmutzung kommen. Zudem können austretende Stäube gesundheitsgefährdend sein oder auch aufgrund von übergroßer Staubablagerung zu einer Beschädigung des Motors, des Getriebes bzw. des Antriebsstrangs führen.

Für derartige Abdichtungen werden typischer Weise verschiedene Dichtungskonzepte eingesetzt. Zum einen können unterschiedliche Dichtungstypen eingesetzt werden, wie etwa Radialwellendichtringe, O-Ringe, Stopfbuchspackungen oder dergleichen. Zum anderen können auch Dichtungsmedien, wie etwa Luft, Fett, Wasser, oder dergleichen, in den Zwischenraum eingebracht werden, um einen Staubaustritt zu verhindern. Es ist aber auch bekannt, den Einsatz verschiedener Dichtungstypen und/oder Dichtungsmedien zu kombinieren, zum Beispiel indem zwei Radialwellendichtringe mit einer zusätzlichen Sperrwassereinspeisung kombiniert werden.

Eine derartige Kombination aus Dichtungsmitteln und Dichtungsmedien wird vor allem dann vorgenommen, wenn die Dichtleistung hoch und/oder der Verschleiß innerhalb der Dichtung niedrig sein muss. Sofern eine Kombination aus Dichtungsmittel und Dichtungsmedium angestrebt wird, wird hierbei typischer Weise die Zuführung des Dichtungsmediums über mehrere Bohrungen realisiert, die von außen in das umliegende Gehäuse eingebracht werden.

Dieses Vorgehen bringt aber verschiedene Nachteile mit sich. So kann etwa eine Kombination aus Dichtungsmitteln und Dichtungsmedium nur dann zum Einsatz kommen, wenn der vorhandene Bauraum auch zulässt, dass von außen die benötigten Bohrungen in das umliegende Gehäuse vorgenommen werden können. Eine übliche Kombination von Dichtungsmitteln und Dichtungsmedium erfordert also, dass die Dichtung mit einem konventionellen Bohrer erreicht werden kann.

Zudem trifft häufig der Fall auf, dass zwar der Bauraum ausreichend groß ist, jedoch das Dichtungsmedium innerhalb des Gehäuses umgeleitet werden muss. Hierzu müssten mehrere Bohrungen in das Gehäuse eingebracht werden, die innerhalb des Gehäuses zusammentreffen. Dies stellt zum einen hohe fertigungstechnische Anforderungen. Zum anderen können hierbei durch den Bohrvorgang Späne in den Bohrungen entstehen, die wegen mangelnder Zugänglichkeit nicht entfernt werden können und das Fließverhalten des Dichtungsmediums negativ beeinflussen. Auch müssen bis auf die für die Zuleitung des Dichtungsmediums vorgesehene Bohrung alle Bohrungen nach der Fertigung mit einem Stopfen gegenüber der Umgebung verschlossen werden, um einen ungewollten Austritt des Dichtungsmediums zu verhindern. Da dies einen zusätzlichen Fertigungsschritt nach sich zieht, werden hierdurch weitere Kosten erzeugt.

Aus diesem Grund ist es üblich, auf mehrere Bohrungen im Gehäuse zu verzichten. Die Einspeisung des Dichtungsmediums erfolgt dann aber lediglich an einem Punkt der Welle, d.h. über nur einen Kanal, um den spanenden Fertigungsaufwand möglichst gering zu halten. Dies führt aber dazu, dass das Dichtungsmedium nicht radialsymmetrisch an die Welle geführt werden kann, wodurch die Abdichtleistung beeinträchtigt werden kann.

Es ist Aufgabe der vorliegenden Erfindung eine Abdichtvorrichtung zum Abdichten eines Zwischenraums zwischen einem Gehäuse und einer in dem Gehäuse drehbar gelagerten Welle zu schaffen (wie z.B. einer Extruderschneckenwelle), mit der die oben genannten Nachteile nicht auftreten. Es soll also eine Abdichtvorrichtung geschaffen werden, die unabhängig vom vorhandenen Bauraum eine Kombination von Dichtungsmitteln und einem Dichtungsmedium ermöglicht. Hierbei soll das Dichtungsmedium radial symmetrisch an die Welle geführt werden können, ohne durch aus einem Herstellungsverfahren der Abdichtvorrichtung resultierende Rückstände in seinem Fluss behindert zu werden.

Diese Aufgabe wird mit dem Gegenstand der unabhängigen Ansprüche gelöst. Vorteilhafte Weiterbildungen sind in den abhängigen Ansprüchen definiert.

So kann eine derartige Abdichtvorrichtung einen ersten plattenförmigen Körper mit einer Vorderseite, einer Rückseite und einer ersten Öffnung aufweisen, die sich von der Vorderseite zu der Rückseite erstreckt und zum Durchführen der Welle geeignet ist. Die Abdichtvorrichtung weist zudem eine in dem Körper verlaufende Leitung auf, die zum Führen eines flüssigen oder gasförmigen Mediums geeignet ist. Hierbei ist der erste Körper geeignet, derart dicht an dem Gehäuse befestigt zu werden, dass die in dem Gehäuse drehbar gelagerte Welle durch die erste Öffnung geführt wird. Die Leitung kann eine Mehrzahl von mit einem Einlass über zumindest eine Umlenkung und/oder zumindest eine Auffächerung verbundenen Auslässen aufweisen, die radialsymmetrisch in die erste Öffnung führen. Die erste Öffnung ist hierbei derart zum Einbringen von ersten Dichtmitteln geeignet, dass die ersten Dichtmittel einen Zwischenraum zwischen der Welle und dem ersten Körper abdichten, ohne die Auslässe der Leitung zu blockieren.

Anstatt die Zuführung des Dichtungsmediums, d.h. eines zum Abdichten geeigneten gasförmigen oder flüssigen Mediums, wie etwa Luft, Wasser oder Fett, direkt durch das Gehäuse zu leiten, wird also eine Abdichtplatte vorgesehen, die an einem zum Antriebsstrang der Welle führenden Teil des Gehäuses angebracht werden kann. Dies erfolgt dabei dicht und bündig, d.h. derart, dass die Verbindung zwischen Gehäuse und Abdichtplatte (d.h. dem ersten plattenförmigen Körper) dicht gegenüber dem abzudichtenden Stoff ist und kein Austreten des Stoffes erlaubt. Falls dies vorteilhaft ist, können auch weitere Komponenten zwischen dem Gehäuse und dem ersten Körper angeordnet sein, solange diese die Abdichteigenschaften nicht beeinträchtigen.

Die aus dem Gehäuse ragende Welle kann in dieser Position des ersten Körpers durch die darin enthaltene Öffnung geführt werden. Das Problem der Abdichtung des Zwischenraums zwischen Gehäuse und Welle wird dadurch auf das Problem der Abdichtung zwischen der Welle und dem ersten Körper, d.h. der Abdichtplatte verschoben.

Dies ermöglicht es, die für die Abdichtung notwendigen Mittel, wie Dichtungsmittel und Dichtungsmedium in die Öffnung einzubringen, anstatt für eine direkte Abdichtung im Gehäuse zu sorgen. Dadurch werden die mit mangelndem Bauraum am Gehäuse zusammenhängenden Probleme umgangen, da die Abdichtvorrichtung, bzw. die Abdichtplatte oder der erste Körper, unabhängig vom Gehäuse mit hierfür geeigneten Mitteln geformt werden kann.

Dies ermöglicht es insbesondere, den ersten Körper derart auszugestalten, dass von einem einzigen Einlass aus eine Leitung durch Auffächerung und/oder Umlenkung der Leitung zu mehreren Auslässen geführt werden kann, die radialsymmetrisch an Seitenwänden der Öffnung münden und damit geeignet sind, das Dichtungsmedium radialsymmetrisch auf die Welle zu geben.

Zugleich kann die Öffnung in bekannter Weise, z.B. durch Verjüngung oder Abstufung dazu geeignet sein, dass üblicher Weise für die Abdichtung von Wellen verwendete Dichtmittel in sie eingesetzt werden können, ohne die Auslässe der Dichtungsmediumsleitung zu blockieren. Zum Beispiel kann eine Pressdichtung oder Stopfbuchspackung an einer Stufe der Öffnung gebildet werden, um eine Abdichtung zwischen erstem Körper und Welle zu schaffen, die dann zusammen mit dem über die Leitung eingebrachten Dichtungsmedium die Abdichtung zwischen Welle und Gehäuse realisiert. Ebenso könnten andere Dichtungsmittel, wie etwa O-Ringe, Radialwellendichtringe oder dergleichen, in geeigneter Weise in und/oder an der Öffnung befestigbar sein, um die Dichtung herzustellen.

Idealer Weise lässt sich das Dichtungsmedium gegenüber den derart eingebrachten Dichtungsmitteln mit Druck beaufschlagen, d.h. die Dichtungsmittel sind im Normalfall alleine ausreichend, um ein Austreten des abzudichtenden Stoffes zu verhindern. Ergibt sich aber während des Betriebs, dass die Welle leicht aus ihrer normalen Position verdrängt wird, so kann dies zu einer kurzzeitigen Undichtigkeit des Dichtungsmittels führen. In diesem Fall wird aber das unter Druck stehende Dichtungsmedium in den undichten Bereich zwischen erstem Körper und Dichtungsmittel strömen und auf Grund seiner Fließrichtung und/oder seiner Viskosität ein Austreten des abzudichtenden Stoffes verhindern. Alternativ kann das Dichtungsmedium auch ohne Druck an den Dichtungsmitteln anliegen. Dann wird ein aus dem Gehäuse austretender Stoff in dem Dichtungsmedium aufgefangen, das typischer Weise eine höhere Viskosität als der austretende Stoff hat. In diesem Fall kann das Dichtungsmedium auch vor den Dichtmittein angeordnet sein.

Der erste Körper kann hierbei aus mehreren Einzelkomponenten bestehen. Zum Beispiel kann der erste Körper aus zwei Platten bestehen. Auf einer Oberfläche der ersten Platte kann die Leitung gefräst sein. Die zweite Platte wird dann auf die erste Platte in abgedichteter Weise aufgebracht, z.B. aufgeschweißt oder bündig angeschraubt/vernietet. Auf diese Weise wird die Leitung ohne die Notwendigkeit mehrere Bohrungen durchzuführen in dem ersten Körper erzeugt.

Alternativ kann der erste Körper einstückig ausgebildet sein, d.h. der erste Körper besteht aus nur einem Bauteil ohne Unterkomponenten. Dies kann mittels additiver Fertigung erreicht werden. Der erste Körper kann insbesondere durch 3D-Druck erzeugt werden. Die Leitung und die Öffnung werden hierbei also direkt bei der Fertigung des ersten Körpers freigelassen. Eine Notwendigkeit die Leitung oder die Öffnung durch Fräsen oder Bohren herzustellen besteht nicht.

Die Herstellung mittels additiver Fertigungsverfahren hat den Vorteil, dass Form und Lage der Leitungen und der Öffnung vollkommen frei wählbar sind, sowohl hinsichtlich des Verlaufs als auch des Querschnitts. Zudem besteht keine Gefahr, dass Späne oder dergleichen die Leitungen zusetzen, da diese ohne spanende Verfahren erzeugt werden. Die Leitungen können insbesondere jeden beliebigen Querschnitt aufweisen, z.B. rund, oval oder eckig und können diesen je nach Bedarf wechseln. Auch kann sich die Querschnittsfläche innerhalb der Leitung ändern. Ebenso ist es möglich, eine beliebige, vorteilhafte Leitungsführung zu realisieren, also insbesondere eine beliebige Anzahl von Umlenkungen und/oder Abzweigungen bzw. Auffächerungen vorzunehmen. Hierdurch kann der Druckabfall innerhalb der Leitung optimal eingestellt werden, was zu einem geringeren Verbrauch von Dichtungsmedium und/oder zu einer Energieeinsparung führt.

Der erste Körper kann aus jedem Material hergestellt werden, das eine ausreichende Festigkeit für die Verwendung als Abdichtplatte hat. Vorzugsweise ist der erste Körper aus Metall, z.B. aus Aluminium gefertigt

Die Abdichtvorrichtung kann neben dem ersten Körper auch die ersten Dichtmittel aufweisen, wobei die ersten Dichtmittel bezüglich der Auslässe der Leitung auf der Seite angeordnet sind, an der der erste Körper mit dem Gehäuse verbunden ist. Dies hat den Vorteil, dass ein Ausströmen bzw. Austreten des abzudichtenden Stoffes durch die Kombination von erstem Dichtmittel und durch die Leitung eingebrachtem Dichtungsmedium effektiv verhindert werden kann.

Die Abdichtvorrichtung kann des Weiteren zweite Dichtmittel aufweisen, die einen Zwischenraum zwischen der Welle und dem ersten Körper abdichten, ohne die Auslässe der Leitung zu blockieren, wobei die Auslässe zwischen den ersten Dichtmitteln und den zweiten Dichtmitteln angeordnet sind. Hierdurch lässt sich das Dichtungsmedium in vorteilhafter Weise mit Druck beaufschlagt zwischen die beiden Dichtmittel einbringen. Das Dichtungsmedium tritt dann nur aus dem Bereich zwischen Dichtmitteln und erstem Körper aus, wenn eines der Dichtmittel, z.B. durch eine kurzzeitige Unwucht der Welle, seine Dichtheit verliert und dadurch den Austritt ermöglicht. Neben einer Verbesserung der Dichtheit der Abdichtvorrichtung erlaubt dies auch den Verbrauch von Dichtungsmedium zu reduzieren. Zusätzlich kann der im Dichtungsmedium vorhandene Druck überwacht werden, z.B. mit einem an die Leitung angeschlossenen Drucksensor. Dies erlaubt es, die Dichtheit der Abdichtvorrichtung zu überwachen, da bei einem ständigen Druckverlust davon ausgegangen werden muss, dass zumindest eines der Dichtmittel undicht geworden ist. Hierdurch lässt sich eine punktuelle Wartung der Abdichtvorrichtung mit Nachstellen bzw. Austausch der Dichtmittel realisieren.

Die ersten Dichtmittel und/oder die zweiten Dichtmittel können als Stopfbuchse ausgebildet sein. Dies ist eine einfach zu realisierende Abdichtung für drehendbare Wellen. Zudem erlaubt eine Stopfbuchse ein Nachstellen der Dichtung bei beginnender Undichtigkeit. Die Dichtmittel können so möglichst lange in Betrieb bleiben, ohne ausgetauscht werden zu müssen.

Die Abdichtvorrichtung kann des Weiteren einen zweiten plattenförmigen Körper mit einer zweiten Öffnung aufweisen, der geeignet ist an einer dem Gehäuse abgewandten Seite des ersten Körpers derart dicht mit dem ersten Körper verbunden zu werden, dass die erste Öffnung und die zweite Öffnung sich überlappen und erlauben, die Welle durch sie hindurchzuführen. Hierbei ist die zweite Öffnung derart zum Einbringen der zweiten Dichtmittel geeignet ist, dass die zweiten Dichtmittel einen Zwischenraum zwischen der Welle und dem zweiten Körper abdichten, ohne die Auslässe der Leitung zu blockieren.

Es kann also eine zweite Abdichtplatte bzw. ein zweiter Körper derart auf den ersten Körper aufgebracht werden, dass die erste Öffnung durch die zweite Öffnung verlängert wird. Die Befestigung des zweiten Körpers an dem ersten Körper geschieht hierbei derart, dass der abzudichtende Stoff nicht zwischen dem ersten und dem zweiten Körper austreten kann. Die Abdichtung des ersten Körpers gegenüber der Welle, die durch die zweiten Dichtmittel geschieht, kann deshalb auch im Bereich des zweiten Körpers erfolgen. Die Leitung befindet sich hierbei im ersten Körper. Alternativ kann sie sich aber auch im zweiten Körper befinden, solange die Leitungsauslässe nicht durch die zweiten Dichtmittel blockiert werden. Der zweite Körper kann auch ein eigenes Leitungssystem aufweisen. Auf diese Weise kann der Aufbau der Abdichtvorrichtung flexibler gestaltet werden und die Abdichteffizienz weiter verbessert werden.

Der erste Körper kann eine dritte Öffnung aufweisen, die zum Durchführen einer weiteren Welle geeignet ist. Dies erlaubt es, die Abdichtvorrichtung auch für Vorrichtungen zu verwenden, die mehrere, insbesondere parallele, Wellen aufweisen. Insbesondere ist eine derartige Abdichtvorrichtung für einen Einsatz in Mehrwellenextrudern geeignet.

Die derart ausgestaltete Abdichtvorrichtung kann des Weiteren einen dritten Körper aufweisen, der wie der erste Körper aufgebaut ist und geeignet ist, derart dicht mit dem ersten Körper verbunden zu werden, dass die erste Öffnung des ersten Körpers sich mit der dritten Öffnung des dritten Körpers überlappt und das Durchführen der Welle erlaubt, und dass die dritte Öffnung des ersten Körpers sich mit der ersten Öffnung des dritten Körpers überlappt und ein Durchführen der weiteren Welle erlaubt.

Erster und dritter Körper sind also im Wesentlichen baugleich, d.h. sie weisen die gleichen Arten von Öffnungen und Leitungen auf. Beide Körper weisen eine Öffnung (erste Öffnung), in der Leitungsauslässe für ein Dichtungsmedium angeordnet sind, und eine weitere Öffnung (dritte Öffnung) auf. Durch beide Öffnungen kann eine Welle geführt werden. Die Öffnungen mit den Leitungsauslässen liegen aber nicht übereinander, sondern sind jeweils einer anderen Welle zugeordnet Hierdurch lässt sich in der oben geschilderten Weise eine Abdichtung für zwei parallel laufende Wellen realisieren, wie sie z.B. in Zweischneckenextrudern vorhanden sind. Dies ist insbesondere deshalb von Vorteil, da bei derartigen Vorrichtungen durch Wechselwirkung des zu durchmischenden Mediums mit den mit den Wellen verbundenen Extruderschnecken Kräfte auf die Wellen wirken, die diese auseinanderdrücken. Eine oben beschriebene kurzfristige Undichtigkeit von Dichtungsmitteln tritt also bei Zweischneckenextrudern relativ häufig auf. Dieser kann durch die oben beschriebene Abdichtvorrichtung mit erstem und drittem Körper effizient abgeholfen werden, indem ein Austritt des abzudichtenden Stoffes durch Dichtungsmedium aufgefangen wird.

Ebenso ist es denkbar, in einer Abdichtplatte mehrere Öffnungen mit Leitungssystemen für ein Dichtungsmedium vorzusehen, wie sie oben beschrieben wurden. Auch hierdurch können Mehrwellensysteme mit einer beliebigen Anzahl von Wellen effektiv abgedichtet werden. Zudem können mehrere Abdichtplatten, wie sie oben beschrieben wurden, bei entsprechender Ergänzung von Durchtrittsöffnungen, aufeinander befestigt für die Abdichtung von Systemen mit einer beliebigen Anzahl von Wellen verwendet werden.

Eine Extrusionsvorrichtung kann eine in einem Gehäuse mittels einer Welle drehbar gelagerte Extrusionsschnecke und eine Abdichtvorrichtung zum Abdichten des Zwischenraums zwischen dem Gehäuse und der Welle aufweisen, wie sie oben beschrieben wurde. Eine derartige Extrusionsvorrichtung ist also gegen das Austreten von Extrudat und/oder von, insbesondere pulverförmigen, Mischzusätzen in Richtung des Schneckenantriebs effektiv abgedichtet.

Eine Mehrschnecken-Extrusionsvorrichtung kann zwei in einem Gehäuse mittels einer ersten Welle und einer zweiten Welle drehbar gelagerte Extrusionsschnecken und eine Abdichtvorrichtung für mehrere Wellen aufweisen, wie sie oben beschrieben wurde. Hierdurch können Mehrschnecken-Extruder in effektiver Weise gegen das Austreten von Extrudat und/oder von, insbesondere pulverförmigen, Mischzusätzen in Richtung des Schneckenantriebs abgedichtet werden.

Ein Verfahren zur Herstellung einer Abdichtvorrichtung wie sie oben beschrieben wurde kann aufweisen: Erzeugen des ersten Körpers mittels eines additiven Herstellungsverfahrens, insbesondere mittels 3D-Druck. Wie oben beschrieben erlaubt dies, die Abdichtvorrichtung in möglichst effizienter und einsatztauglicher Weise herzustellen.

Ein Computerprogrammprodukt kann bei Ausführung auf einer Vorrichtung zur additiven Fertigung, die Vorrichtung zur additiven Fertigung veranlassen, das obige Verfahren durchzuführen.

Im Folgenden soll die Erfindung unter Bezug auf die beigefügten Figuren im Detail erläutert werden. Es versteht sich von selbst, dass diese Beschreibung nur beispielhaft ist. Der Gegenstand der Erfindung ist allein durch die Ansprüche definiert. Es zeigt:
- **Fig. 1**: eine schematische Ansicht einer Abdichtvorrichtung; und
- **Fig. 2**: eine schematische Ansicht einer weiteren Abdichtvorrichtung.

Im Folgenden wird die vorliegende Erfindung mit Bezug auf eine Abdichtvorrichtung 100 für einen Zweischneckenextruder erläutert. Die Erfindung soll hierdurch aber nicht beschränkt werden. Insbesondere soll die Verallgemeinerung der folgenden Beschreibung auf Abdichtvorrichtungen für Extruder mit nur einer oder mehr als zwei Schnecken und auch die Verallgemeinerung auf Abdichtvorrichtungen für andere Maschinen, die eine oder mehrere gegenüber einem Gehäuse abzudichtende Wellen aufweisen, von der Erfindung mitumfasst sein, soweit sie unter den Gegenstand der Ansprüche fällt.

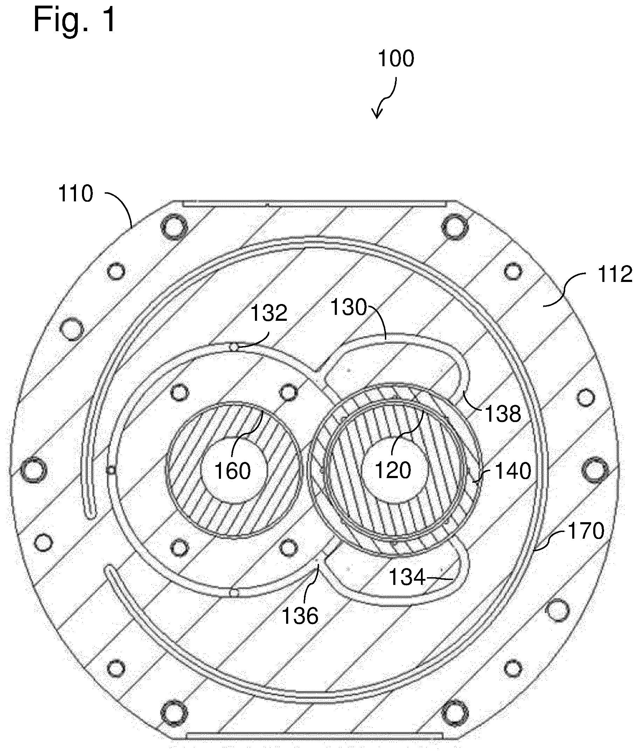

Die Fig. 1 zeigt eine schematische Ansicht der Abdichtvorrichtung 100 zum Abdichten eines Zwischenraums zwischen einem Gehäuse und einer in dem Gehäuse drehbar gelagerten Welle.

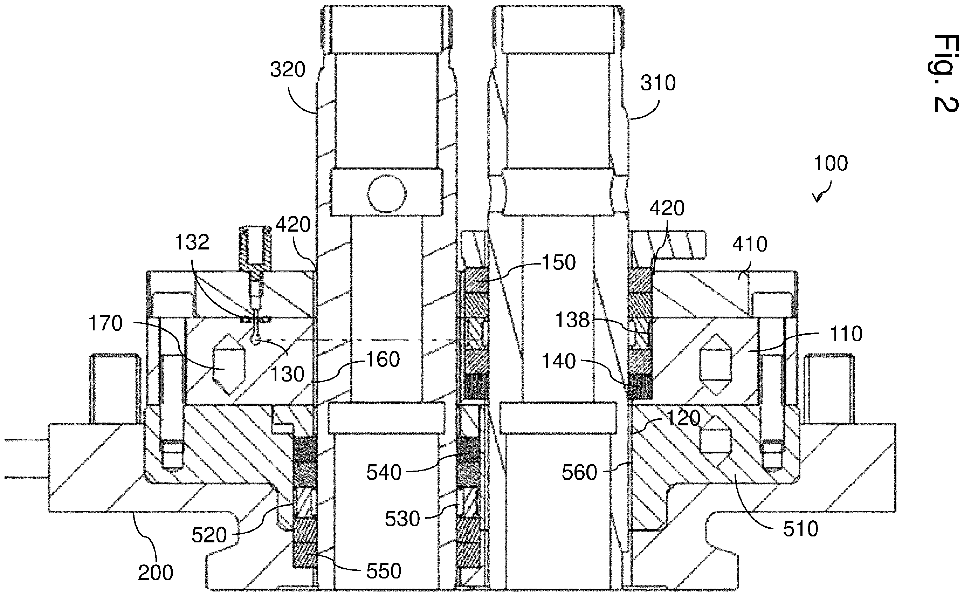

Die Abdichtvorrichtung 100 weist einen plattenförmigen ersten Körper 110 auf. Die Abdichtvorrichtung 100 kann im Wesentlichen aus dem ersten Körper 110 bestehen. Sie kann aber, wie unten beispielhaft mit Bezug auf die Fig. 2 erläutert wird, auch aus mehreren Komponenten aufgebaut sein.

Der erste Körper 110 ist als Abdeckplatte ausgebildet, d.h. seine Ausdehnung in zwei Richtungen ist größer als seine Ausdehnung in die dritte Richtung. Der erste Körper 110 ist dabei derart ausgestaltet, dass er an einer Oberfläche des abzudichtenden Gehäuses fest und bündig angebracht werden kann, z.B. durch Schraubverbindungen, Nieten, Schweißen oder dergleichen. Die Oberfläche des ersten Körpers 110, die mit dem Gehäuse in Kontakt kommt, kann dabei beliebig ausgebildet sein, solange garantiert wird, dass der Kontakt zwischen Gehäuse und erstem Körper 110 derart dicht ist, dass aus dem Gehäuse austretende Stoffe nicht entlang der Verbindung zwischen Gehäuse und erstem Körper 110 entweichen können. Auf diese Weise wird erreicht, dass die erwünschte Abdichtung zwischen Gehäuse und Welle auch zwischen dem ersten Körper 110 und der Welle hergestellt werden kann.

Die Abdichtung zwischen Gehäuse und erstem Körper 110 kann dabei in beliebiger bekannter Weise erfolgen, z.B. durch reine Pressverbindung von aneinander anliegenden Bauteilen mittels Verschraubung, Vernietung oder dergleichen, durch zusätzliche Dichtmittel, wie etwa Gummidichtelemente, oder Dichtmedien, wie etwa Fett, oder auch durch ein Verschweißen von erstem Körper 110 und Gehäuse.

Wie mit Bezug auf die Fig. 2 erläutert wird, können auch weitere Komponenten zwischen dem Gehäuse und dem ersten Körper 110 angeordnet sein, solange die Verbindung des Gehäuses mit dem ersten Körper 110 (inklusive der weiteren Komponenten) insgesamt dicht ist.

Der erste Körper 110 kann hierbei aus jedem ausreichend festen Material bestehen, das geeignet ist, in der weiter unten beschriebenen Form ausgebildet zu werden, und das sich mit dem Gehäuse verbinden lässt. Insbesondere kann der erste Körper 110 aus einem Metall wie etwa Aluminium oder Eisen bestehen. Der erste Körper 110 kann aber auch aus einem ausreichend harten Kunststoff oder aus Keramik gefertigt sein.

In dem ersten Körper 110 ist eine (erste) Öffnung 120 vorgesehen, die sich zwischen einer Rückseite und einer Vorderseite des ersten Körper 110 erstreckt. Die erste Öffnung 120 ist ausreichend groß, dass die aus dem Gehäuse ragende Welle durch sie hindurch geführt werden kann, wenn die Abdichtvorrichtung 100 bzw. der erste Körper 110 mit dem Gehäuse verbunden sind. Zum Beispiel kann die Öffnung 120 einen Durchmesser von 10 bis 100 cm oder mehr aufweisen, etwa 20, 40, 60 oder 80 cm. Die erste Öffnung 120 erlaubt es also, die Welle zu drehen, wenn die Abdichtvorrichtung 100 und das Gehäuse der Welle miteinander verbunden sind.

Durch die feste und dichte Verbindung von Gehäuse und erstem Körper 110 verlagert sich ein Bereich, aus dem der sich im Gehäuse befindliche, abzudichtende Stoff (z.B. ein Pulver wie Kreide, Talkum oder ein Farbpulver) austreten kann, auf den Zwischenraum zwischen erstem Körper 110 und der Welle. Es genügt zur Abdichtung also den von der Welle nicht ausgefüllten Bereich der Öffnung 120 abzudichten.

Hierzu weist der erste Körper 110 eine Leitung 130 bzw. ein durch die Leitung 130 geformtes Leitungssystem auf, in der ein Dichtungsmedium zur Öffnung 120 geführt werden kann, insbesondere ein gasförmiges oder flüssiges Dichtungsmedium, wie etwa Luft, Wasser oder Fett. Die Leitung 130 kann dabei jeden beliebigen zur Führung des gewünschten Dichtungsmediums geeigneten Querschnitt aufweisen, der sich in seiner Form und seiner Fläche auch verändern kann. Der Durchmesser der Leitung 130 kann im Bereich von 1 mm bis 20 mm liegen und z.B. 2 mm, 5 mm, 10 mm oder 20 mm betragen.

Die Leitung 130 weist einen oder mehrere Einlässe 132 auf, über die das Dichtungsmedium in die Leitung 130 eingebracht werden kann. In der Fig. 1 sind drei solcher Einlässe 132 gezeigt. Es versteht sich aber von selbst, dass jede beliebige zweckdienliche Zahl verwendet werden kann, insbesondere auch nur ein Einlass 132. Die Einlässe 132 können sich sowohl auf der Vorderseite als auch auf der Rückseite des ersten Körpers 110 befinden. Die Zuleitung des Dichtungsmediums kann also von außen, d.h. über die vom Gehäuse abgewandte Seite des ersten Körpers 110 erfolgen. Sie kann aber auch über in dem Gehäuse oder in zwischenliegenden Komponenten angeordneten Leitungen erfolgen. Die Einlässe 132 befinden sich dann in der dem Gehäuse zugewandten Seite des ersten Körpers 110. Die Einlässe bzw. der Einlass 132 können sich aber auch an der Seite des ersten Körper 110 befinden.

Von den Einlässen 132 aus erstreckt sich die Leitung 130 über Umlenkungen 134 und Auffächerungen bzw. Abzweigungen 136 zu Auslässen 138, über die das Dichtungsmedium an die durch die Öffnung 120 geführte Welle herangebracht werden kann. Die Umlenkungen 134 und Auffächerungen 136 dienen dazu, die Welle möglichst radialsymmetrisch mit dem Dichtungsmedium zu umgeben. Die Leitung 130 ist also derart geformt, dass die Auslässe 138 zur Wellenachse radialsymmetrisch angeordnet sind. So sind in der Fig. 1 die vier Auslässe 138 jeweils um 90° zueinander versetzt. Die Anzahl der Auslässe 138 kann beliebig sein. Vorzugseise ist sie größer als eins, um eine gleichmäßige Zuführung von Dichtungsmedium zu gewährleisten. Es ist aber auch eine Abdichtvorrichtung 100 mit nur einem Auslass 138 denkbar.

Die oben beschriebene Kombination von erster Öffnung 120 und Leitung 130 in einem plattenförmigen ersten Körper 110 stellt das Grundprinzip der Abdichtvorrichtung 100 dar. Hiermit lässt sich eine einfache Abdichtung einer in einem Gehäuse drehenden Welle erreichen. Auch wenn dies im Folgenden nicht in den Figuren gezeigt ist, kann diese Kombination allein für eine einzelne Welle verwendet werden. Ebenso wäre es möglich, mehrere derartige Kombinationen in einer einzigen Abdichtplatte unterzubringen, um mehrere Wellen abzudichten.

Alternativ können, wie unten mit Bezug auf die Fig. 2 erläutert, mehrere Abdichtplatten, die entsprechend dem ersten Körper 110 geformt sind, übereinander (oder hintereinander) angebracht sein, um mehrere Wellen abzudichten.

Zu diesem Zweck kann, wie in der Fig. 1 gezeigt, eine weitere (dritte) Öffnung 160 vorgesehen sein, durch die eine weitere Welle geführt werden kann. Diese weitere Öffnung 160 ist jedoch nicht mit Auslässen 138 versehen, d.h. von der in dem ersten Körper 110 vorgesehenen Leitung 130 kann kein Dichtungsmedium in die weitere Öffnung 160 eingebracht werden.

Neben den oben genannten Komponenten kann auch eine Kühlleitung 170 in dem ersten Körper 110 vorgesehen sein, um aufgrund der Drehbewegung der Welle entstandene Reibungswärme abzuführen.

Der erste Körper 110 kann, wie in den Figuren gezeigt, einstückig ausgebildet sein, d.h. der erste Körper 110 ist nicht aus verschiedenen Komponenten ausgebildet. Insbesondere kann der erste Körper 110 in einem additiven Fertigungsverfahren wie dem 3D-Druck hergestellt werden. Dies hat den Vorteil, dass die Leitung 130 und die Öffnungen 120, 160 eine weit flexiblere und nahezu beliebige Form aufweisen können. Zudem wird durch den Verzicht auf spanende Fertigungstechniken, wie Bohren oder Fräsen, verhindert, dass Späne die Leitung 130 ganz oder teilweise blockieren. Vorzugsweise besteht der erste Körper 110 dann aus einem Metall, etwa aus Aluminium.

Es ist aber auch möglich, den ersten Körper 110 aus mehreren Komponenten zusammenzusetzen. Die Leitung 130 kann dann auch mit spanenden Verfahren erzeugt werden, z.B. durch Fräsen auf der Oberfläche einer Komponente, die dann mit einer anderen Komponente verdeckt wird.

Um das aus den Auslässen 138 austretende Dichtungsmedium innerhalb der Öffnung 120 an der Welle zu halten, ist die Öffnung 120 derart ausgestaltet, dass darin ein (erstes) Dichtmittel 140 eingesetzt werden kann, dass die Öffnung 120 im Bereich zwischen erstem Körper 110 und der Welle vollständig abdichtet, ohne die Auslässe 138 zu bedecken. Ein weiteres (zweites) Dichtmittel kann zum Beispiel ebenfalls in der Öffnung 120 angeordnet sein (ohne die Auslässe 138 zu bedecken), um ein Austreten des Dichtungsmediums aus der Öffnung 120 zu verhindern. Die Öffnung 120 kann aber auch in anderer Weise gegen ein solches Austreten abgedichtet sein, z.B. durch flächig auf dem ersten Körper 110 aufgebrachte Dichtmittel, durch die die Welle hindurchragt, oder durch ein Dichtmittel, das von einer weiteren Komponente oder Abdichtplatte an seiner Position gehalten wird.

Das Dichtmittel 140 ist bezüglich der Auslässe 138 vorzugsweise auf der dem Gehäuse zugewandten Seite der Abdichtvorrichtung 100 angeordnet. Es dient daher als erste Abdichtung für aus dem Gehäuse austretenden Stoff. Das Dichtmittel 140 kann dabei jede beliebige Form annehmen, die zum Abdichten des Zwischenraums zwischen dem ersten Körper 110 und der sich drehenden Welle geeignet ist. Zum Beispiel kann es sich bei dem Dichtmittel 140 um einen O-Ring, einen Radialwellendichtring oder dergleichen oder auch eine Kombination daraus handeln. Vorzugsweise ist das Dichtmittel 140 als Stopfbuchse ausgebildet, da dies ein Nachstellen bei Undichtigkeit erlaubt. Das Dichtmittel 140 besteht typischerweise aus Gummi, Kautschuk oder dergleichen. Die Öffnung 120 kann dann z.B. gestuft ausgebildet sein, um ein Einpressen und damit Aufspreizen des Dichtmittels 140 gegen die Stufe zu ermöglichen, wodurch das Dichtmittel 140 gegen die drehbare Welle gepresst wird und so die Abdichtung verbessert.

Bei laufender Welle kann es stets geschehen, dass sich die Welle senkrecht zur Drehachse verschiebt. Dies führt zu einer Quetschung des Dichtmittels 140 wodurch ein kleiner undichter Bereich zwischen Dichtmittel 140 und Welle oder zwischen Dichtmittel 140 und erstem Köper 110 entstehen kann. Durch diesen Bereich kann der sich im Gehäuse befindliche, abzudichtende Stoff austreten. Er wird dann aber durch das Dichtungsmedium in der Öffnung 120 aufgefangen.

Zudem kann das Dichtungsmedium bei Vorsehen eines weiteren Dichtmittels auf der anderen Seite der Auslässe 138 unter Druck in dem Zwischenraum zwischen den Dichtmitteln eingebracht werden. Dann führt das Auftreten eines undichten Bereichs an einem der Dichtmittel dazu, dass das Dichtmittel in den Bereich einströmt und damit den abzudichtenden Stoff am Austreten hindert.

Mit der Leitung verbundene Drucksensoren können den damit verbundenen Druckabfall feststellen. Dies ermöglicht es, die Dichtheit der Abdichtung zu überwachen, um rechtzeitig eine Reparatur oder einen Ersatz der Abdichtvorrichtung 100 einzuleiten.

Das Dichtmittel 140 kann aber auch auf der dem Gehäuse abgewandten Seite der Abdichtvorrichtung 100 in die Öffnung 120 einsetzbar sein und dort z.B. durch eine Stufe gehalten werden. Auch in diesem Fall wird durch die Kombination von Dichtungsmedium und Dichtmittel 140 eine verbesserte Abdichtung erreicht. Das Abdichtmedium wird dann durch ein weiteres, z.B. auf dem ersten Körper 110 aufliegendes, Dichtmittel in der Öffnung gehalten, das zwischen dem ersten Körper 110 und dem Gehäuse angeordnet ist.

Mit der in der Fig. 1 gezeigten Abdichtvorrichtung 100 ist es also möglich, die oben genannten Probleme zu lösen. Ein Dichtungsmedium kann in einer Leitung, die ohne spanende Verfahren und ohne Raumnot in einer Abdichtplatte angeordnet ist, radialsymmetrisch in eine Öffnung geführt werden, in der es den Bereich um eine drehbare Welle abdichtet. Die Öffnung kann zudem Dichtmittel aufnehmen oder durch Dichtmittel abdichtbar sein, die das Dichtungsmedium zwischen sich halten. Dadurch wird eine langlebige und verlässliche Abdichtung erreicht.

Die Fig. 2 zeigt schematisch eine um weitere Komponenten ergänzte Anordnung der Abdichtvorrichtung 100 der Fig. 1 an einem Gehäuse 200, z.B. einer Zweischneckenextrusionsvorrichtung. Die Abdichtvorrichtung 100 der Fig. 2 ist zur Abdichtung einer ersten Welle 310 und einer zweiten Welle 320 geeignet, die in dem Gehäuse 200 zwei Extruderschnecken der Extrusionsvorrichtung antreiben.

Neben dem oben beschriebenen ersten Körper 110 mit der ersten Öffnung 120 weist die Abdichtvorrichtung 100 im Beispiel der Fig. 2 einen zweiten Körper 410 mit zwei zweiten Öffnungen 420 und einen dritten Körper 510 auf, der im Wesentlichen wie der erste Körper 110 ausgebildet ist. Der erste Körper 110 ist dabei in Richtung des Gehäuses 200 an dem dritten Körper 510 und gegenüberliegend mit dem zweiten Körper 410 verbunden. Über den dritten Körper 510 ist die Abdichtvorrichtung 100 mit dem Gehäuse 200 verbunden. Wie in der Fig. 2 gezeigt können die einzelnen Komponenten mittels Schraubverbindungen aneinander befestigt sein. Es ist aber auch jede andere Befestigungsmethode möglich, wie z.B. Schweißen.

Die erste Welle 310 ist in der oben beschriebenen Weise durch die erste Öffnung 120 des ersten Körpers 110 geführt. Die erste Öffnung 120 weist in Richtung des Gehäuses 200 eine Stufe auf, an der das erste Dichtmittel 140 festsitzt. Daran anschließend sind die Auslässe 138 der Leitung 130 angeordnet, über die das Dichtungsmedium in die Öffnung 130 eingespeist wird. Die erste Welle 310 läuft dann durch eine zweite Öffnung 420 in dem zweiten Körper 410 und von dort zum (nicht gezeigten) Getriebe. Diese zweite Öffnung 420 (alternativ die erste Öffnung 120 oder beide Öffnungen in Kooperation) hält ein zweites Dichtmittel 150, das zusammen mit dem ersten Dichtmittel 140 einen Bereich der ersten Öffnung 120 begrenzt und darin das Dichtungsmedium hält. Diese Abfolge ermöglicht eine verlässliche Abdichtung von aus dem Gehäuse 200 entlang der ersten Welle 310 austretendem, abzudichtendem Stoff.

Eine ähnliche Abfolge von Dichtmitteln und Leitungsauslässen ist durch die Interaktion des Gehäuses 200 und des dritten Körpers 510 für die zweite Welle 320 vorgesehen. Der dritte Körper 510 weist eine der ersten Öffnung 120 des ersten Körpers 110 entsprechende erste Öffnung 520 auf, durch die die zweite Welle 320 hindurchragt. Den ersten Dichtmitteln 140 entsprechende dritte Dichtmittel 540 sind an einer Stufe in der ersten Öffnung 520 des dritten Körpers 510 festgesetzt. Diese und den zweiten Dichtmitteln 150 entsprechende vierte Dichtmittel 550 schließen in der ersten Öffnung 520 des dritten Körpers 510 mündende Auslässe einer in dem dritten Körper 510 ausgebildeten Leitung 530 ein. Die Leitung 530 des dritten Körpers 510 kann hierbei mit der Leitung 130 des ersten Körpers 110 verbunden sein, oder einen eigenen Einlass für ein (auch anderweitiges) Dichtungsmedium aufweisen. Die vierten Dichtmittel 550 werden hierbei von einer Ausnehmung im Gehäuse 200 und/oder der ersten Öffnung 520 des dritten Körpers 510 gehalten.

Die zweite Welle 320 läuft dann weiter durch die dritte Öffnung 160 des ersten Körpers 110 und durch eine weitere zweite Öffnung 420 im zweiten Körper 410, ohne nochmals abgedichtet zu werden. Von dort läuft die zweite Welle zum (nicht gezeigten) Getriebe.

Der dritten Öffnung 160 des ersten Körpers 110 entspricht für die erste Welle 310 eine dritte Öffnung 560 des dritten Körpers 510, durch die die erste Welle 310 ebenfalls läuft, ohne abgedichtet zu werden.

Die oben beschriebenen ersten, zweiten, dritten und vierten Dichtmittel 140, 150, 540, 550 können alle vom gleichen Typ sein und z.B. als O-Ring, Radialwellendichtring, Pressdichtung oder Stopfbuchpackung ausgebildet sein. Die Dichtmittel 140, 150, 540, 550 können aber auch verschieden ausgebildet sein, falls dies z.B. aus fertigungstechnischen Gründen oder aus Kostengründen erforderlich sein sollte. Ebenso ist die Kombination verschiedener Dichtungstypen zu einem Dichtmittel möglich.

Wie auch der erste Körper 110 kann der dritte Körper 510 einstückig mittels additiver Fertigung hergestellt sein, wohingegen der zweite Körper 410 vorzugsweise konventionell gefertigt wird, da er kein sich verzweigendes Leitungssystem aufweist, wie der erste Körper 110 und der dritte Körper 510. Die getriebeseitig in dem zweiten Körper 410 gezeigte Zuführung zum Leitungseinlass 132 kann hierbei durch eine Bohrung hergestellt werden. Es ist aber auch möglich, ersten und dritten Körper oder auch alle drei Körper einstückig mittels additiver Fertigung herzustellen.

Durch die in der Fig. 2 gezeigte Abdichtvorrichtung kann eine effektive Abdichtung für Mehrwellenextrusionsvorrichtung erreicht werden, indem die Abdichtung vom Gehäuse der Extrusionsvorrichtung in eine an dem Gehäuse zu befestigende Abdichtplatte verlagert wird. Vorzugsweise ist diese mittels 3D-Druck hergestellt, um eine gleichmäßige und daher besser abdichtende Einspeisung von Dichtungsmedium auf die Welle zu gewährleisten.

Die oben genannten Komponenten der Abdichtvorrichtung können sämtlich mittels im Prinzip bekannten und für die additive Fertigung geeigneten Computerprogrammprodukten, z.B. Dateien für den 3D-Druck, realisiert werden, wenn diese auf einer Vorrichtung für additive Fertigung ausgeführt werden. Dies ermöglicht es, die Abdichtvorrichtungen dezentral herzustellen.

### Bezugszeichenliste

- 100: Abdichtvorrichtung
- 110: Erster Körper
- 120: Erste Öffnung des ersten Körpers
- 130: Leitung im ersten Körper
- 132: Einlass der Leitung im ersten Körper
- 134: Umlenkung der Leitung im ersten Körper
- 136: Auffächerung der Leitung im ersten Körper
- 138: Auslass der Leitung im ersten Körper
- 140: Erstes Dichtmittel
- 150: Zweites Dichtmittel
- 160: Dritte Öffnung des ersten Körpers
- 170: Kühlleitung
- 200: Gehäuse
- 310: (erste) Welle
- 320: (zweite) Welle
- 410: Zweiter Körper
- 420: Zweite Öffnung
- 510: Dritter Körper
- 520: Erste Öffnung im dritten Körper
- 530: Leitung im dritten Körper
- 540: Drittes Dichtmittel
- 550: Viertes Dichtmittel
- 560: Dritte Öffnung im dritten Körper

## Patentansprüche

1. Abdichtvorrichtung (100) zum Abdichten des Zwischenraums zwischen einem Gehäuse (200) und einer in dem Gehäuse drehbar gelagerten Welle (310), aufweisend:
einen ersten plattenförmigen Körper (110) mit einer Vorderseite, einer Rückseite und einer ersten Öffnung (120), die sich von der Vorderseite zu der Rückseite erstreckt und zum Durchführen der Welle (310) geeignet ist;
eine in dem Körper (110) verlaufende Leitung (130), die zum Führen eines flüssigen oder gasförmigen Mediums geeignet ist;
erste Dichtmittel (140);
wobei
der erste Körper (110) geeignet ist, derart dicht an dem Gehäuse (200) befestigt zu werden, dass die in dem Gehäuse (200) drehbar gelagerte Welle (310) durch die erste Öffnung (120) geführt wird;
die Leitung (130) eine Mehrzahl von mit einem Einlass (132) über zumindest eine Umlenkung (134) und/oder zumindest eine Auffächerung (136) verbundenen Auslässen (138) aufweist, die radialsymmetrisch in die erste Öffnung (120) führen;
die erste Öffnung (120) derart zum Einbringen von ersten Dichtmitteln (140) geeignet ist, dass die ersten Dichtmittel (140) einen Zwischenraum zwischen der Welle (310) und dem ersten Körper (110) abdichten, ohne die Auslässe (138) der Leitung (130) zu blockieren; und
der erste Körper (110) einstückig ausgebildet ist; und
die ersten Dichtmittel (140) bezüglich der Auslässe (138) der Leitung (130) auf der Seite angeordnet sind, an der der erste Körper (110) mit dem Gehäuse (200) verbunden ist.

2. Abdichtvorrichtung (100) nach Anspruch 1, wobei
der erste Körper (110) mittels eines additiven Fertigungsverfahrens hergestellt ist.

3. Abdichtvorrichtung (100) nach einem der vorherigen Ansprüche, des Weiteren aufweisend
zweite Dichtmittel (150), die einen Zwischenraum zwischen der Welle (310) und dem ersten Körper (110) abdichten, ohne die Auslässe (138) der Leitung (130) zu blockieren; wobei
die Auslässe (138) zwischen den ersten Dichtmitteln (140) und den zweiten Dichtmitteln (150) angeordnet sind.

4. Abdichtvorrichtung (100) nach Anspruch 3, wobei
die ersten Dichtmittel (140) und/oder die zweiten Dichtmittel (150) als Stopfbuchse ausgebildet sind.

5. Abdichtvorrichtung (100) nach einem der vorherigen Ansprüche, des Weiteren aufweisend
einen zweiten plattenförmigen Körper (410) mit einer zweiten Öffnung (420), der geeignet ist, an einer dem Gehäuse (200) abgewandten Seite des ersten Körpers (110) derart dicht mit dem ersten Körper (110) verbunden zu werden, dass die erste Öffnung (120) und die zweite Öffnung (420) sich überlappen und erlauben, die Welle (310) durch sie hindurchzuführen; wobei
die zweite Öffnung (420) derart zum Einbringen von zweiten Dichtmittel (150) geeignet ist, dass die zweiten Dichtmittel (150) einen Zwischenraum zwischen der Welle (310) und dem zweiten Körper (410) abdichten, ohne die Auslässe (138) der Leitung (130) zu blockieren.

6. Abdichtvorrichtung (100) nach einem der vorherigen Ansprüche, wobei
der erste Körper (110) eine dritte Öffnung (160) aufweist, die zum Durchführen einer weiteren Welle (320) geeignet ist.

7. Abdichtvorrichtung (100) nach Anspruch 6, des Weiteren aufweisend
einen dritten Körper (510), der wie der erste Körper (110) aufgebaut ist und geeignet ist, derart dicht mit dem ersten Körper (110) verbunden zu werden, dass die erste Öffnung (120) des ersten Körpers (110) sich mit der dritten Öffnung (560) des dritten Körpers (510) überlappt und das Durchführen der Welle (310) erlaubt, und dass die dritte Öffnung (160) des ersten Körpers (110) sich mit der ersten Öffnung (520) des dritten Körpers (510) überlappt und ein Durchführen der weiteren Welle (320) erlaubt.

8. Extrusionsvorrichtung, aufweisend
eine in einem Gehäuse (200) mittels einer Welle (310) drehbar gelagerte Extrusionsschnecke; und
eine Abdichtvorrichtung (100) nach einem der vorherigen Ansprüche zum Abdichten des Zwischenraums zwischen dem Gehäuse (200) und der Welle (300).

9. Mehrschnecken-Extrusionsvorrichtung, aufweisend
zwei in einem Gehäuse (200) mittels einer ersten Welle (310) und einer zweiten Welle (320) drehbar gelagerte Extrusionsschnecken; und
eine Abdichtvorrichtung (100) nach Anspruch 6 oder 7 zum Abdichten des Zwischenraums zwischen dem Gehäuse (200) und der ersten Welle (310) und der zweiten Welle (320).

10. Verfahren zur Herstellung einer Abdichtvorrichtung nach einem der Ansprüche 1 bis 7, aufweisend:
Erzeugen des ersten Körpers mittels eines additiven Herstellungsverfahrens, insbesondere mittels 3D-Druck.

11. Computerprogrammprodukt, das bei Ausführung auf einer Vorrichtung zur additiven Fertigung, die Vorrichtung zur additiven Fertigung veranlasst, das obige Verfahren durchzuführen.

## Claims

1. A sealing device (100) for sealing off the intermediate space between a housing (200) and a shaft (310) which is rotatably mounted in the housing, having:
a first plate-shaped body (110) with a front side, a rear side and a first opening (120), which extends from the front side to the rear side and is suitable for the leadthrough of the shaft (310);
a line (130) running in the body (110), which is suitable for conducting a liquid or gaseous medium;
first sealing means (140);
wherein
the first body (110) is suitable to be fastened sealingly to the housing (200), such that the shaft (310) which is rotatably mounted in the housing (200) is directed through the first opening (120);
the line (130) has a multiplicity of outlets (138) which are connected to an inlet (132) via at least one diversion (134) and/or at least one divergence (136), and which lead radially symmetrically into the first opening (120);
the first opening (120) is suitable for the introduction of first sealing means (140) such that the first sealing means (140) seal off an intermediate space between the shaft (310) and the first body (110), without blocking the outlets (138) of the line (130); and
the first body (110) is formed in one piece; and
the first sealing means (140) are arranged with respect to the outlets (138) of the line (130) on the side at which the first body (110) is connected to the housing (200).

2. The sealing device (100) according to Claim 1, wherein
the first body (110) is produced by means of an additive manufacturing method.

3. The sealing device (100) according to one of the preceding claims, furthermore having
second sealing means (150), which seal off an intermediate space between the shaft (310) and the first body (110), without blocking the outlets (138) of the line (130); wherein
the outlets (138) are arranged between the first sealing means (140) and the second sealing means (150) .

4. The sealing device (100) according to Claim 3, wherein
the first sealing means (140) and/or the second sealing means (150) are configured as a stuffing box.

5. The sealing device (100) according to one of the preceding claims, furthermore having
a second plate-shaped body (410) with a second opening (420), which is suitable for being connected sealingly to the first body (110) on a side of the first body (110) facing away from the housing (200) such that the first opening (120) and the second opening (420) overlap one another and allow the shaft (310) to be guided through them; wherein
the second opening (420) is suitable for the introduction of second sealing means (150) such that the second sealing means (150) seal off an intermediate space between the shaft (310) and the second body (410) without blocking the outlets (138) of the line (130).

6. The sealing device (100) according to one of the preceding claims, wherein
the first body (110) has a third opening (160) which is suitable for the leadthrough of a further shaft (320) .

7. The sealing device (100) according to Claim 6, furthermore having
a third body (510) which is constructed like the first body (110) and is suitable to be connected sealingly to the first body (110) such that the first opening (120) of the first body (110) overlaps with the third opening (560) of the third body (510) and permits the feedthrough of the shaft (310), and that the third opening (160) of the first body (110) overlaps with the first opening (520) of the third body (510) and permits a feedthrough of the further shaft (320).

8. An extrusion device, having
an extrusion screw, mounted rotatably in a housing (200) by means of a shaft (310); and
a sealing device (100) according to one of the preceding claims for sealing off the intermediate space between the housing (200) and the shaft (300).

9. A multi-screw extrusion device, having
two extrusion screws, mounted rotatably in a housing (200) by means of a first shaft (310) and a second shaft (320); and
a sealing device (100) according to Claim 6 or 7 for sealing off the intermediate space between the housing (200) and the first shaft (310) and the second shaft (320) .

10. A method for producing a sealing device according to one of Claims 1 to 7, comprising:
producing the first body by means of an additive production method, in particular by means of 3D printing.

11. A computer program product which, on execution on a device for additive manufacture, causes the device for additive manufacture to carry out the above method.

## Revendications

1. Dispositif d'étanchéité (100) pour étanchéifier l'espace intermédiaire entre un logement (200) et un arbre (310) disposé rotatif dans le logement, présentant :
un premier corps en forme de plaque (110) avec une face avant, une face arrière et une première ouverture (120) qui s'étend de la face avant à la face arrière et est appropriée pour le passage de l'arbre (310) ;
une conduite (130) passant dans le corps (110) qui est appropriée pour guider un agent liquide ou gazeux ;
des premiers moyens d'étanchéité (140) ;
dans lequel
le premier corps (110) est approprié pour être fixé de manière étanche au logement (200) de telle manière que l'arbre (310) disposé rotatif dans le logement (200) est dirigé à travers la première ouverture (120) ;
la conduite (130) présente une pluralité de sorties (138) reliées à une entrée (132) par au moins une déviation (134) et/ou au moins une répartition (136), qui conduisent dans la première ouverture (120) en étant radialement symétriques ;
la première ouverture (120) est ainsi appropriée pour introduire des premiers moyens d'étanchéité (140) que les premiers moyens d'étanchéité (140) étanchéifient un espace intermédiaire entre l'arbre (310) et le premier corps (110), sans bloquer les sorties (138) de la conduite (130) ; et
le premier corps (110) est formé d'un seul tenant ; et
les premiers moyens d'étanchéité (140) sont disposés, par rapport aux sorties (138) de la conduite (130), sur le côté sur lequel le premier corps (110) est relié au logement (200).

2. Dispositif d'étanchéité (100) selon la revendication 1, dans lequel
le premier corps (110) est fabriqué au moyen d'un procédé de fabrication additive.

3. Dispositif d'étanchéité (100) selon l'une des revendications précédentes, présentant en outre
des deuxièmes moyens d'étanchéité (150) qui étanchéifient un espace intermédiaire entre l'arbre (310) et le premier corps (110), sans bloquer les sorties (138) de la conduite (130) ; dans lequel
les sorties (138) sont disposées entre les premiers moyens d'étanchéité (140) et les deuxièmes moyens d'étanchéité (150).

4. Dispositif d'étanchéité (100) selon la revendication 3, dans lequel
les premiers moyens d'étanchéité (140) et/ou les deuxièmes moyens d'étanchéité (150) sont formés en tant que presse-étoupe.

5. Dispositif d'étanchéité (100) selon l'une des revendications précédentes, présentant en outre
un deuxième corps en forme de plaque (410) avec une deuxième ouverture (420) qui est approprié pour être relié en étanchéité avec le premier corps (110) sur un côté du premier corps (110) détourné du logement (200) de telle sorte que la première ouverture (120) et la deuxième ouverture (420) se chevauchent et permettent de faire passer l'arbre (310) au travers d'elles ; dans lequel
la deuxième ouverture (420) est ainsi appropriée pour introduire des deuxièmes moyens d'étanchéité (150) que les deuxièmes moyens d'étanchéité (150) étanchéifient un espace intermédiaire entre l'arbre (310) et le deuxième corps (410), sans bloquer les sorties (138) de la conduite (130).

6. Dispositif d'étanchéité (100) selon l'une des revendications précédentes, dans lequel
le premier corps (110) présente une troisième ouverture (160) qui est appropriée pour le passage d'un autre arbre (320).

7. Dispositif d'étanchéité (100) selon la revendication 6, présentant en outre
un troisième corps (510) qui est construit comme le premier corps (110) et est approprié pour être relié en étanchéité avec le premier corps (110) de telle sorte que la première ouverture (120) du premier corps (110) se chevauche avec la troisième ouverture (560) du troisième corps (510) et permet le passage de l'arbre (310), et que la troisième ouverture (160) du premier corps (110) se chevauche avec la première ouverture (520) du troisième corps (510) et permet un passage de l'autre arbre (320).

8. Dispositif d'extrusion, présentant
une vis d'extrusion disposée dans le logement (200) et rotative par un arbre (310) ; et
un dispositif d'étanchéité (100) selon l'une des revendications précédentes pour étanchéifier l'espace intermédiaire entre le logement (200) et l'arbre (300).

9. Dispositif d'extrusion à plusieurs vis, présentant
deux vis d'extrusion disposées dans le logement (200) et rotatives par un premier arbre (310) et un deuxième arbre (320) ; et
un dispositif d'étanchéité (100) selon la revendication 6 ou 7 pour étanchéifier l'espace intermédiaire entre le logement (200) et le premier arbre (310) et le deuxième arbre (320).

10. Procédé de fabrication d'un dispositif d'étanchéité selon l'une des revendications 1 à 7, présentant :
la fabrication du premier corps au moyen d'un procédé de fabrication additive, en particulier d'impression 3D.

11. Produit de programme informatique qui, lorsqu'exécuté sur un dispositif de fabrication additive, fait que le dispositif de fabrication additive exécute le procédé ci-dessus.
